**Europäisches Patentamt**

**European Patent Office**

**Office européen des brevets**

(11) Veröffentlichungsnummer: **0 082 491**
**B1**

(12) **EUROPÄISCHE PATENTSCHRIFT**

(45) Veröffentlichungstag der Patentschrift:
**14.05.86**

(21) Anmeldenummer: **82111693.6**

(22) Anmeldetag: **16.12.82**

(51) Int. Cl.⁴: **G 01 S 13/82**

(54) Sende- und Empfangsschaltung für eine Einrichtung zur automatischen Identifizierung von Objekten und/oder Lebewesen.

(30) Priorität: **21.12.81 DE 3150704**

(43) Veröffentlichungstag der Anmeldung:
**29.06.83 Patentblatt 83/26**

(45) Bekanntmachung des Hinweises auf die Patenterteilung:
**14.05.86 Patentblatt 86/20**

(84) Benannte Vertragsstaaten:
**AT BE CH DE FR GB IT LI NL SE**

(56) Entgegenhaltungen:
**DE - A - 2 524 571**
**DE - A - 2 919 753**
**US - A - 3 460 139**
**US - A - 3 522 602**

(73) Patentinhaber: **BROWN, BOVERI & CIE**
**Aktiengesellschaft, Kallstadter Strasse 1,**
**D-6800 Mannheim 31 (DE)**

(72) Erfinder: **Strietzel, Rainer, Im Schnepfengrund 8,**
**D-6900 Heidelberg 1 (DE)**

(74) Vertreter: **Kempe, Wolfgang, Dr. et al, c/o Brown, Boveri**
**& Cie AG Postfach 351, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Sende- und Empfangsschaltung für eine Einrichtung zur automatischen Identifizierung von Objekten und/oder Lebewesen, bestehend aus einem ortsfesten Abfragegerät und einem am Objekt bzw. Lebewesen befestigten Antwortgerät, wobei das Abfragegerät einen Energiesender, einen Signalsender, eine Auswerteeinheit und eine Sende-Empfangsantenne, das Antwortgerät einen Energieempfänger mit Energiewandler, einen Signalempfänger mit Signaldemodulator, eine Datenverarbeitungseinheit, einen Antwortsender und eine Sende-Empfangsantenne enthalten.

Eine derartige Einrichtung zur automatischen Identifizierung von Objekten und/oder Lebewesen ist bekannt aus der DE-OS 2 919 753. Das bekannte Abfragegerät enthält neben den hochfrequenten Sende- und Empfangseinheiten einen Öffnungscode-Speicher und gegebenenfalls einen Öffnungscode-Zusatzspeicher, die einen Öffnungscode speichern, der dazu dient, ein speziell auf diesen Öffnungscode programmiertes Antwortgerät bzw. eine Gruppe von Antwortgeräten zu aktivieren. Das Antwortgerät enthält hierzu einen Signalempfänger mit nachgeordnetem Öffnungscode-Verlgeicher, der den in einem Öffnungscode-Speicher und gegebenenfalls Öffnungscode-Zusatzspeicher gespeicherten Code mit dem über den Funkweg empfangenen Code vergleicht. Das Ausgangssignal des Öffnungscode-Vergleichers steuert über einen Öffnungscode-Verarbeiter den Antwortsender. Darüber hinaus können Abfragegerät und Antwortgerät weitere Daten verarbeitende Einheiten besitzen, jeweils entsprechend dem gewünschten Einsatzzweck.

Aus der DE-OS 2 524 571 ist ein Homodyn-Übertragunssystem zur Funkortung bekannt. Als Homodyn-System wird ein System bezeichnet, bei dem eine Probe des übertragenen Signals als lokales Oszillationssignal verwendet wird. Das Hochfrequenzsignal wird von einer Abfrageeinheit ausgesendet und von einer kompatiblen Rückmeldeeinheit aufgefangen. Die Rückmeldeeinheit liefert ein Signal, das an die Abfrageeinheit reflektiert oder zurückgesendet wird. Eine Probe des ausgesendeten Signals wird zusammen mit dem Anwortsignal einem geeigneten Phasendetektor oder einer Mischstufe zugeleitet. Die Amplitude des Mischstufen-Ausgangssignals ist gleich dem Produkt, das sich aus der Amplitude der Probe des ausgesendeten Signals und der Amplitude des Antwortsignals sowie dem Cosinus des relativen Phasenwinkels ergibt. Da das Abfrage- und das Antwortsignal von derselben Quelle geliefert werden, ist die relative Phase dieser Signale bzw. die Phasendifferenz zwischen den Signalen eine Funktion der Entfernung zwischen der Abfrage- und der Rückmeldeeinheit. Wenn die Probe des Abfragesignals und das Antwortsignal um 90° phasenverschoben sind, weist jedoch das Mischstufen-Ausgangssignal ein Amplituden-Null auf.

Die Beseitigung derartiger Amplituden-Nulls und der daraus resultierenden möglichen Fehler bei der Verarbeitung und Wiedergewinnung der Information über die Entfernung zwischen Abfrageeinheit und Rückmeldeeinheit ist Gegenstand dieser Offenlegungsschrift.

In dem Buch von H. Groll: «Mikrowellen-Messtechnik», Verlag Friedrich Viebig & Sohn, Braunschweig, 1969 ist auf Seite 217 in Abbildung 6.70 eine Mikrowellen-Messvorrichtung zur Bestimmung der Impedanz eines Messobjekts mit Hilfe von zwei Richtkopplern beschrieben. Ein Anteil der vom Messsender zum Messobjekt hinlaufenden Welle wird von einem ersten Richtkoppler ausgekoppelt und über ein einstellbares Dämpfungsglied und einen einstellbaren Phasenschieber an den einen Eingang eines T-Gliedes geführt. Die vom Messobjekt reflektierte Welle wird über einen zweiten Richtkoppler an den zweiten Eingang des T-Gliedes geführt. Durch gleichzeitige Verstellung des Dämpfungsgliedes und des Phasenschiebers lässt sich erreichen, dass am T-Stück die beiden Wellen gleiche Amplitude und 180° Phasenverschiebung besitzen. Dann ergibt sich an der Diode am Ausgang des T-Gliedes Null-Anzeige und der Betrag des Reflexionsfaktors kann unter der Voraussetzung, dass beide Richtkoppler gleich Koppeldämpfung haben, am Dämpfungsglied abgelesen werden. Zur Messung der Phase des Reflexionsfaktors muss durch einen Kurzschlussversuch eine Bezugsphase eingestellt werden. Die Phase des Messobjekts ergibt sich dann aus der Differenz der beiden Einstellungen des Phasenschiebers.

Der vorliegenden Erfindung liegt die Aufgabe zugrunde, eine Sende- und Empfangsschaltung für eine Einrichtung zur automatischen Identifizierung von Objekten und/oder Lebewesen anzugeben, die es ermöglicht, bei Verwendung nur einer einzigen Antenne zum Senden und Empfangen von Energiefrequenzen, Signalfrequenz und Antwortfrequenz die Antwortfrequenz und die mit ihr übertragene Information aus dem an der Antenne des Abfragegeräts anstehenden Signalgemisch herauszufiltern.

Diese Aufgabe wird dadurch gelöst, dass im Abfragegerät zwischen Sender und Antenne ein erster Richtkoppler für hinlaufende Wellen und in Serie dazu ein zweiter Richtkoppler für rücklaufende Wellen angeordnet sind, dass der vom ersten Richtkoppler ausgekoppelte Energieanteil über ein einstellbares Dämpfungsglied und einen einstellbaren Phasenschieber und der vom zweiten Richtkoppler ausgekoppelte Energieanteil direkt an die beiden entgegengesetzten Enden eines ersten Armes eines dritten Richtkopplers geführt sind, der einen weiteren Arm zur Auskopplung eines Teils der vom zweiten zum dritten Richtkoppler laufenden Energie aufweist, und dass das Dämpfungsglied und der Phasenschieber so abgestimmt sind, dass das am Ausgang des weiteren Armes des dritten Richtkopplers erscheinende Signal ein Minimum hat.

Die Erfindung macht von der an sich bekannten Tatsache Gebrauch, dass zwei von derselben

2

Quelle stammende Wellen durch Phasendrehung, Amplitudendämpfung und Überlagerung ausgelöscht werden können. Das besondere der vorliegenden Erfindung besteht jedoch darin, dass Energiefrequenz und Signalfrequenz nicht übereinstimmen, dass die Impedanz des vom Strahlungsfeld der Antenne des Abfragegerätes erfassten Raumes nicht definierbar ist und dass es im Gegensatz zu dem oben beschriebenen Mikrowellen-Impedanzmessverfahren nicht möglich ist, Phasenschieber und Dämpfungsglied durch einen Kurzschlussversuch zu eichen. Als weitere Schwierigkeit kommt hinzu, dass die Energiefrequenz beispielsweise mit einer Leistung von einigen Watt abgestrahlt wird, da sie die Spannungsversorgung des Antwortgerätes sicherstellen muss, dass die Signalfrequenz aufgrund gesetzlicher Bestimmungen mit maximal 0,5W abgestrahlt werden darf und dass die Antwortfrequenz im Leistungsbereich von Nanowatt empfangen wird. Trotz dieser ungünstigen Voraussetzungen ist es mit der erfindungsgemässen Sende- und Empfangsschaltung möglich, die vom Antwortsender des Antwortgerätes abgestrahlte Information aus dem Signalgemisch an der Sende-Empfangsantenne des Abfragegerätes herauszufiltern.

Gemäss einer vorteilhaften Weiterbildung ist für das Dämpfungsglied und für den Phasenschieber je ein Regler vorgesehen, der Änderungen von Amplitude bzw. Phase zwischen hinlaufenden und rücklaufenden Wellen kontinuierlich kompensiert. Hierdurch wird erreicht, dass die beim praktischen Einsatz der Einrichtung zur automatischen Identifizierung von Objekten und/oder Lebewesen immer auftretenden Änderungen der Reflexionsverhältnisse des von der Antenne des Abfragegerätes erfassten Raums nicht zu einer derartigen Verstellung des Kompensationspunktes führen können, dass das vom Antwortsignalsender stammende Signal nicht mehr erkannt werden könnte. Bei den bekannten Anwendungsfällen zur Impedanzmessung können derartige Probleme nicht auftreten, da dort die Mikrowelle die Messschaltung nicht verlässt.

Vorteilhafterweise sendet der Energiesender unmoduliert mit hoher Leistung auf der Energiefrequenz und der Signalsender mit erheblich geringerer Leistung – das Leistungsverhältnis liegt bei etwa 100 : 1 – auf einer der Energiefrequenz benachbarten Signalfrequenz, moduliert mit einem Informationssignal. Hiermit ist es möglich, einerseits das Antwortgerät drahtlos mit der nötigen Hochfrequenzleistung anzustrahlen, die zum Erzeugen einer ausreichenden Versorgungsgleichspannung nötig ist, andererseits aber auch die gesetzlichen Bestimmungen einzuhalten, die das Abstrahlen von modulierter Hochfrequenzenergie bei Anlagen der Art, auf die sich die Erfindung bezieht, nur mit einer maximalen Leistung von 0,5W erlauben.

Gemäss einer Weiterbildung der Erfindung strahlt der Antwortsender das Antwortsignal mit der Energiefrequenz ab. Auf diese Weise ist es möglich, einen Teil des vom Antwortgerät aufgenommenen Energiesignals als Träger für den Antwortsender zu benutzen, einen eigenen, eine hohe Leistung aufnehmenden lokalen Sender im Antwortgerät zu vermeiden.

Anhand der Zeichnung soll die Erfindung in Form eines Ausführungsbeispiels erläutert werden. Es zeigen:

Fig. 1 das hochfrequenzseitige Blockschaltbild eines Abfragegeräts und

Fig. 2 das Blockschaltbild eines Antwortgerätes.

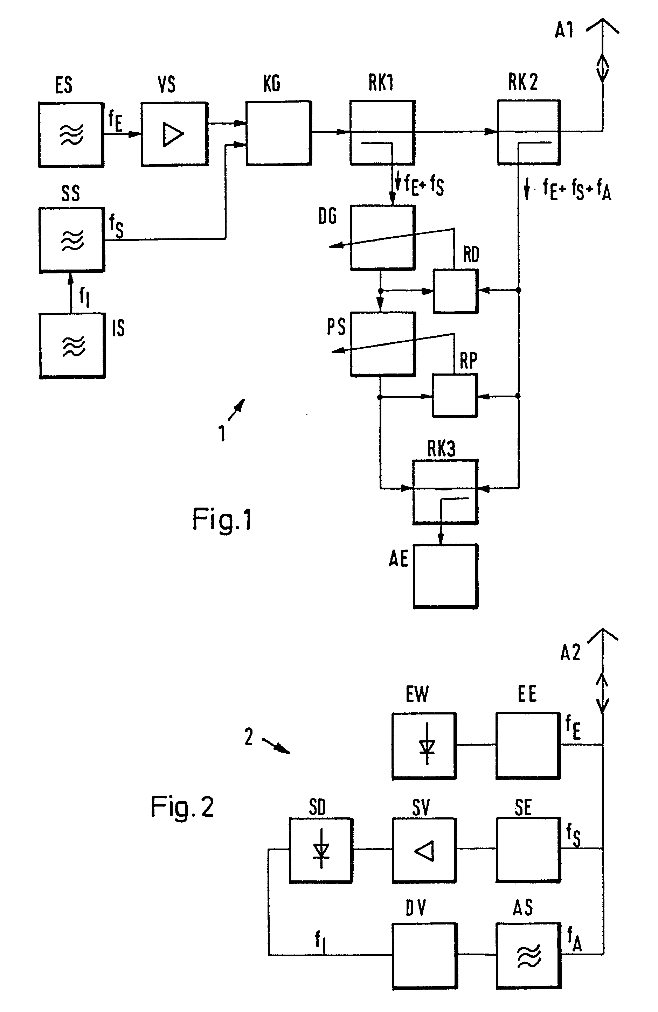

In Fig. 1 erkennt man ein Abfragegerät 1 mit einem Energiesender ES, der eine Hoch- oder Höchstfrequenzwelle mit der Energiefrequenz $f_E$ über einen Sendeverstärker VS an den einen Eingang eines Koppelgliedes KG liefert. Man erkennt ferner einen Signalsender SS, der eine Hoch- oder Höchstfrequenzwelle mit der Signalfrequenz $f_S$ an den zweiten Eingang des Koppelgliedes KG liefert. Die Signalfrequenz ist moduliert mit der Informationsfrequenz $f_I$, die von einem Informationssender IS geliefert wird. Aufbau und Wirkungsweise des Informationssenders IS können der eingangs schon erwähnten DE-OS 2 919 753 entnommen werden.

Die Summe von Energiewelle und Signalwelle gelangt vom Ausgang des Koppelgliedes KG als hinlaufende Welle über einen ersten Richtkoppler RK1 und einen zweiten Richtkoppler RK2 zu einer Sende- und Empfangsantenne A1, von der sie abgestrahlt wird.

Die von der Sende- und Empfangsantenne A1 aufgenommenen Hoch- oder Höchstfrequenz-Energie gelangt als rücklaufende Welle zu dem zweiten Richtkoppler RK2, wird dort ausgekoppelt und gelangt direkt an den einen Eingang eines dritten Richtkopplers RK3. Dem zweiten Eingang des dritten Richtkopplers RK3 wird ein Teil der vom ersten Richtkoppler RK1 ausgekoppelten hinlaufenden Welle zugeführt. Im dritten Richtkoppler RK3 überlagern sich beide Wellenzüge und das Ergebnis dieser Überlagerung wird einem Auswertungsempfänger AE zugeführt.

Um eine möglichst gute Kompensation im dritten Richtkoppler RK3 ermöglichen zu können, wird der Teil der im ersten Richtkoppler RK1 ausgekoppelten hinlaufenden Welle, die sowohl die Energiefrequenz $f_E$ als auch die Signalfrequenz $f_S$ enthält, über ein einstellbares Dämpfungsglied DG und über einen einstellbaren Phasenschieber PS zugeführt. Das Dämpfungsglied DG und der Phasenschieber PS werden über einen Dämpfungsregler RD bzw. über einen Phasenregler RP so gesteuert, dass das am Ausgang des dritten Richtkopplers RK3 erscheinende Signal ein Minimum hat. Auf diese Weise ist es möglich, in der rücklaufenden Welle, die neben der Energiefrequenz $f_E$ und der Signalfrequenz $f_S$ auch die Antwortfrequenz $f_A$ des Antwortsenders AS im Antwortgerät 2 enthält, die Anteile der Energiefrequenz $f_E$ und der Signalfrequenz $f_S$ durch Kompensation herauszufiltern, so dass dem Eingang des Auswertungsempfängers AE nur noch die Anteile mit der Antwortfrequenz $f_A$ zugeführt werden.

In Fig. 2 erkennt man, dass das Antwortgerät 2 eine Sende- und Empfangsantenne A2 enthält, an die ein Energieempfänger EE angeschlossen ist, der die Energiefrequenz $f_E$ herausfiltert und an einen Energiewandler EW führt, der daraus die Versorgungsgleichspannung für das Antwortgerät 2 erzeugt. An die Antenne A2 ist ferner ein Signalempfänger SE angeschlossen, der die Signalfrequenz $f_S$ herausfiltert und sie über einen Signalverstärker SV an einen Signaldemodulator SD liefert. Im Signaldemodulator wird die Informationsfrequenz $f_I$ wiedergewonnen, die an eine Datenverarbeitungseinrichtung DV geliefert wird. Aufbau und Wirkungsweise der Datenverarbeitungseinheit können wiederum der schon erwähnten DE-OS 29 19 753 entnommen werden.

Das Ausgangssignal der Datenverarbeitungseinheit DV moduliert einen Antwortsignalsender AS, der die Antwortfrequenz $f_A$ an die Antenne A2 liefert, von wo sie an das Abfragegerät 1 zurückgestrahlt wird. Dabei ist es möglich, dass – wie schon erwähnt – die Antwortfrequenz $f_A$ gleich der Energiefrequenz $f_E$ ist.

## Patentansprüche

1. Sende- und Empfangsschaltung für eine Einrichtung zur automatischen Identifizierung von Objekten und/oder Lebewesen, bestehend aus einem ortsfesten Abfragegerät (1) und einem am Objekt bzw. Lebewesen befestigten Antwortgerät (2), wobei das Abfragegerät (1) einen Energiesender (ES), einen Signalsender (SS), eine Auswerteeinheit (AE) und eine Sende-Empfangsantenne (A1), das Antwortgerät (2) einen Energieempfänger (EE) mit Energiewandler (EW), einen Signalempfänger (SE) mit Signaldemodulator (SD), eine Datenverarbeitungseinheit (DV), einen Antwortsender (AS) und eine Sende-Empfangsantenne (A1) enthalten, dadurch gekennzeichnet, dass im Abfragegerät zwischen Sender (ES, SS) und Antenne (A1) ein erster Richtkoppler (RK1) für hinlaufende Wellen ($f_E$, $f_S$) und in Serie dazu ein zweiter Richtkoppler (RK2) für rücklaufende Wellen ($f_E$, $f_S$, $f_A$) angeordnet sind, dass der vom ersten Richtkoppler (RK1) ausgekoppelte Energieanteil über ein einstellbares Dämpfungsglied (DG) und einen einstellbaren Phasenschieber (PS), und der vom zweiten Richtkoppler (RK2) ausgekoppelte Energieanteil direkt an die beiden entgegengesetzten Enden eines ersten Armes – eines dritten Richtkopplers (RK3) geführt sind, der einen weiteren Arm zur Auskopplung eines Teils der vom zweiten zum dritten Richtkoppler laufenden Energie aufweist, und dass das Dämpfungsglied (DG) und der Phasenschieber (PS) so abgestimmt sind, dass das am Ausgang des weiteren Armes des dritten Richtkopplers (RK3) erscheinende Signal ein Minimum hat.

2. Schaltung nach Anspruch 1, dadurch gekennzeichnet, dass für das Dämpfungsglied (DG) und den Phasenschieber (PS) je ein Regler (RD, RP) vorgesehen ist, der Änderungen von Amplitude bzw. Phase zwischen hinlaufenden ($f_E$, $f_S$) und rücklaufenden ($f_E$, $f_S$, $f_A$) Wellen kontinuierlich kompensiert.

3. Schaltung nach Anspruch 1 oder 2, dadurch gekennzeichnet, dass der Energiesender (ES) mit hoher Leistung auf der Energiefrequenz ($f_E$) unmoduliert und der Signalsender (SS) mit erheblich geringerer Leistung – Leistungsverhältnis ca. 100:1 – auf einer der Energiefrequenz ($f_E$) benachbarten Signalfrequenz ($f_S$), moduliert mit einem Informationssignal ($f_I$), sendet.

4. Schaltung nach Anspruch 1, 2 oder 3, dadurch gekennzeichnet, dass der Antwortsender (AS) das Antwortsignal ($f_A$) mit der Energiefrequenz ($f_E$) abstrahlt.

## Claims

1. Transmiting and receiving circuit for a device for the automatic identification of inanimate and/or animate objects, consisting of a stationary interrogation device (1) and a response device (2) which is attached to the inanimate or animate object, in which arrangement the interrogation device (1) contains an energy transmitter (ES), a signal transmitter (SS), an analysing unit (AE) and a transmitting/receiving antenna (A1) and the response device (2) contains an energy receiver (EE) including an energy transformer (EW), a signal receiver (SE) including a signal demodulator (SD), a data processing unit (DV), a response transmitter (AS) and a transmitting/receiving antenna (A1), characterised in that a first directional coupler (RK1) for outgoing waves ($f_E$, $f_S$) and in series with this a second directional coupler (RK2) for returning waves ($f_E$, $f_S$, $f_A$) are arranged between the transmitter (ES, SS) and the antenna (A1) in the interrogation device, that the energy component coupled out from the first directional coupler (RK1) is conducted via an adjustable damping section (DG) and an adjustable phase shifter (PS), and the energy component coupled out from the second directional coupler (RK2) is conducted directly to the two opposite ends of a first arm of a third directional coupler (RK3) which has another arm for coupling out a portion of the energy going from the second to the third directional coupler, and that the damping section (DG) and the phase shifter (PS) are tuned in such a manner that the signal appearing at the output of the other arm of the third directional coupler (RK3) is at minimum.

2. Circuit according to Claim 1, characterised in that the damping section (DG) and the phase shifter (PS) are each provided with a regulator (RD, RP) which continuously compensates for changes of amplitude and phase between outgoing ($f_E$, $f_S$0) and returning ($f_E$, $f_S$, $f_A$) waves.

3. Circuit according to Claim 1 or 2, characterised in that the energy transmitter (ES) transmits unmodulated and with high power on the energy frequency ($f_E$) and the signal transmitter (SS) transmits modulated with an information signal ($f_I$) and with considerably less power – power ratio approximately 100:1 – on a signal frequency

(f<sub>S</sub>) which is adjacent to the energy frequency ($f_E$).

4. Circuit according to Claim 1, 2 or 3, characterised in that response transmitter (AS) radiates the response signal ($f_A$) with the energy frequency ($f_E$).

## Revendications

1. Circuit émetteur et récepteur pour un dispositif destiné à l'identification automatique d'objets et/ou d'êtres vivants, constitué par un instrument d'interrogation (1) stationnaire et un instrument de réponse (2) fixé sur l'objet ou l'être vivant, l'instrument d'interrogation (1) contenant un émetteur d'énergie (ES), un émetteur de signaux (SS), une unité d'évaluation (AO) et une antenne émettrice-réceptrice (A1), l'instrument de réponse (2) contenant un récepteur d'énergie (EE) avec convertisseur d'énergie (EW), un récepteur de signaux (SE) avec modulateur de signaux (SD), une unité de traitement des données (DV), un émetteur de réponse (AS) et une antenne emettrice-réceptrice (A1), caractérisé par le fait qu'à l'intérieur de l'instrument d'interrogation sont disposés entre l'émetteur (ES, SS) et l'antenne (A1) un premier coupleur directif (RK1) pour les ondes aller ($f_D$, $f_S$) et en série avec celui-ci un deuxième coupleur directif (RK2) pour les ondes retour ($f_E$, $f_S$, $f_A$), que la part d'énergie extraite par le premier coupleur directif (RKI) et la part d'énergie extraite par le deuxième coupleur directif (RK2) sont conduites, la première en passant par un atténuateur réglable (DG) et un déphaseur réglable (PS), et la seconde directement aux extrémités opposées d'un premier bras d'un troisième coupleur directif (RK3), venant du premier coupleur (RK1) et présentant un autre bras destiné à extraire une part de l'énergie allant du deuxième au troisième coupleur directif, et que l'atténuateur (DG) et le déphaseur (PS) sont accordés de telle manière que le signal apparaissant à la sortie de l'autre bras du troisième coupleur directif (RK3) présente un minimum.

2. Circuit selon la revendication 1, caractérisé par le fait qu'un régulateur (RD, RP) est prévu pour l'atténuateur (DG) et le déphaseur (PS) respectivement, régulateur qui compense de manière continue les modifications d'amplitude ou de phase entre les ondes aller ($f_E$, $F_S$) et les ondes retour ($f_E$, $f_S$, $f_A$).

3. Circuit selon la revendication 1 ou 2, caractérisé par le fait que l'émetteur d'énergie (ES) émet à haute puissance et sans modulation sur la fréquence d'énergie ($f_E$) et que l'émetteur de signaux (SS) émet à une puissance considérablement plus faible – rapport de puissance 100:1 environ – sur une fréquence de signaux ($f_S$) voisine de la fréquence d'énergie ($f_E$), avec modulation par un signal d'information ($f_I$).

4. Circuit selon la revendication 1, 2 ou 3, caractérisé par le fait que l'émetteur de réponse (AS) émet le signal de réponse ($f_A$) à la fréquence d'énergie ($f_E$).

Fig.1

Fig. 2